# EUROPEAN PATENT APPLICATION

(11) **EP 4 242 873 A1**
(43) Date of publication of application: **13.09.2023**
(21) Application number: 22160663.5
(22) Date of filing: 08.03.2022
(51) Int. Cl.: G06F 16/33, G06F 16/383, G06F 16/83, G06V 30/41

(54) **SIMPLIFIED EXTRACTION OF STATIC DOCUMENTS AND SCALING THEREOF**

(71) Applicant: BASF Coatings GmbH, 48165 Münster (DE)
(72) Inventor: Janssen, Thomas, 49448 Lemförde (DE); von Mühlenen, Adrian, 48165 Münster (DE)
(74) Representative: Eisenführ Speiser

(57) **Abstract**

The present invention relates to a method for extracting information from a document, preferably from a safety data sheet. The method is based on a data extracting list and a set of rules, preferably ontology based. Thus, an ontology based information extraction (OBIE) is provided, in particular wherein users (without any programming skills) are able to extract data from the documents and automatically delivering a structured output thereof, e.g. enterprise resource planning.

## Description

### FIELD OF THE INVENTION

The invention relates to a method, a system and a computer program product for extracting information from a document.

### BACKGROUND OF THE INVENTION

Manual document processing is error prone, slow and a major cost driver in enterprises. For example, the extraction of information from a complex document like a safety data sheet may take a technical expert several hours, depending on the extent of the respective safety data sheet.

For this reason, computer-based methods such as information extraction are commonly used, comprising various techniques. These various techniques, however, are usually either inaccurate or require a deep prerequisite of programming knowledge of the user to adapt the computer-based methods to new document types.

Therefore, there is a need to improve information extraction. In particular, it would be advantageous to provide a more accurate working method and/or system and/or computer program product for information extraction, which is preferably extendable for a user without having in-depth programming knowledge, e.g. for new information to be extracted or other document types or other document authors.

In particular, a method and/or a system and/or a computer program product would be advantageous allowing unknowledgeable users (without any programming skills) to extract data from documents and automatically delivering a structured output of such information.

### SUMMARY OF THE INVENTION

According to a first aspect of the invention, a method for extracting information from a document is provided, preferably from a safety data sheet. The method comprises the steps of: receiving a machine-encoded text of the document; providing, in particular based on metadata of the machine encoded text and/or the document, at least a data extracting list having at least a predefined value corresponding to the information to be extracted from the machine-encoded text or the document and a set of rules having at least a rule for validating a data quality for a match of the predefined value with the information within the machine-encoded text; searching the machine-encoded text for the predefined value, thereby finding a match of the predefined value with the information; validating the data quality of the match, based on the rule; and providing the match as an output, in particular, if the data quality is acceptable.

Thus, a method for semi-automatically or automatically extracting information from a document is provided. Preferably, the method is a computer-based method. Computer-based methods for extracting information are also known as information extraction (IE). Information extraction (IE) aims to retrieve certain types of information from natural language text by processing them semi-automatically or automatically. For example, an information extraction system might retrieve information about toxicity of a substance from a safety data sheet or the like.

In a first step, a machine-encoded text of the document is received. The document may be any kind of document. Preferably, the document comprises technical data and/or scientific data, in particular technical data about a delivered material, chemical or the like, such as material properties or chemical properties, e.g. toxicity, flash point or the like. Preferably, the document may also comprise other data like supplier name, supplier address or the like or any other kind of data. Preferably, the document also comprises metadata, like descriptive metadata, structural metadata, administrative metadata, reference metadata, statistical metadata, legal metadata or the like, e.g. author, time and date of creation or the like. The document may be a physical document or a digital document. Preferably, the document is a digital document in a portable document format, e.g. in form of a PDF document. To obtain this kind of document format, any kind of pre-processing may be used. The pre-processing may be scanning or data format conversion or the like. Preferably, the document is a machine-readably document, in particular a machine-readably document providing technical data in natural language text, e.g. a safety data sheet or the like.

A safety data sheet (also called SDS) is a document that lists technical information relating to occupational safety and health for the use of various substances and/or products, e.g. for cataloguing information on chemicals, chemical compounds, and chemical mixtures. A safety data sheet may also include instructions for the safe use and potential hazards associated with a particular material or product, along with spill-handling procedures.

The machine-encoded text is preferably an electronic or digital conversion of the document. The machine-encoded text is preferably an electronic conversion of the document including the above mentioned data, like technical data or metadata. In case the document is a physical document, a scanner and/or an optical character reader may be used for creating a machine-encoded text of the document. In case the document is already a digital document, an optical character recognitions software or the like may be used for creating a machined-encoded text of the document. Preferably, the machine-encoded text is also a machine-readable text. For example, the document is a physical safety data sheet of a chemical supplied by a supplier. The physical safety data sheet is then digitalised into a machine-encoded text, e.g. into a PDF document, preferably by using a scanner with optical character recognition (OCR). Accordingly, the machine-encoded text is in a raw format, also called raw machine-encoded text, which may be processed further, e.g. by using support vector machines (SVM) or the like, thereby obtaining a processed and/or structured machine-encoded text.

In a next step, a data extracting list and a set of rules are provided, in particular based on metadata of the machine-encoded text and/or metadata of the document. The data extracting list comprises at least a predefined value corresponding to an information to be extracted from the machine-encoded text or the document. The term "predefined value" refers to a value which is defined in advance, for example by the user or by loading a list comprising predefined values. The set of rules comprises at least a rule for validating a data quality for a match of the predefined value with the information. If the machine-encoded text is a true copy of the document, a predefined value for the machine-encoded text is equal to a predefined value for the document. However, and in some cases, the conversion of a physical document into a machine-encoded text or the physical document itself has errors and therefore, the predefined value needs to be adjusted or other techniques need to be used, like approximate string matching.

The data extracting list may be any kind of list. Preferably, the data extracting list comprises a plurality of predefined values, in particular having a specific structure or relation between the plurality of predefined values. For example, the data extracting list comprises predefined values of a hypernym, like color. Then, the predefined value are hyponyms of this hypernym, like purple, red, blue and the like. Preferably, the data extracting list has at least a hierarchical structure or a relation in between the predefined values or relation defining information between the predefined values or the like. For example, the data extracting list may comprise at least one of: a representation, a formal naming, a definition of a category, properties, domains or the like. Preferably, the data extracting list comprises at least one of: individuals, classes, attributes and relations. Preferably, the data extracting list or the predefined value basis on technical terms of a standard, e.g. European Phrase Catalogue (EuPhraC) or the like.

The predefined value may be any type of element, member, enumeral, enumerator of types or the like. For example, the predefined value may be "toxicity" and therefore, the method proposed herein searches the machine-encoded text for any kind of "toxicity", like "oral toxicity" or "dermal toxicity".

The set of rules comprises at least a rule for validating a data quality. For example, the rule defines any "toxicity" within the first 100 characters of the machine-encoded text as "invalid", in particular due to the fact the first 100 characters of a safety data sheet usually comprise meta data like supplier address and the like. Hence, by using such rules, the data quality can be increased many times over.

In a next step, the machine-encoded text is searched for the predefined value. By doing so, the predefined value may be found within the machine-encoded text or not. If the pre-defined value is found within the machine-encoded text, it will be processed accordingly. If the predefined value is not found within the machine-encoded text, a message may be provided to a user, e.g. via an interface. In order to search the machine-encoded text, the machine-encoded text may be pre-processed, e.g. by using support vector machines (SVM) or the like. For example, the machine-encoded text is decomposed and assembled and optionally vectorised. Preferably, the machine-encoded text is decomposed by normalizing the data, e.g. with respect to spelling and/or building a trigram index and/or using a trigram index. For example, line contents are separated by "." or ";", line breaks in lines or cells are undone and new strings / string variables are generated. Preferably, the decomposed machine-encoded text is assembled, afterwards, and optionally also vectorised. The assembled machine-encoded text is then searched for a match, e.g.by mapping and/or searched the longest match and/or a trigram search is used. Preferably, the match is used as a key.

In a preferred embodiment, the machine-encoded text is pre-processed by using at least one method of text sequencing. For example, the machine-encoded text comprises structure, like headlines, tables and the like. This structure may be used to sequence the machine-encoded text, e.g. by recognizing type and/or format of the text or by recognizing alignment in text of the machine-encoded text. For example, the document comprises a table of text. The information of the table may be as tab stops within the machine-encoded text. Thus, the stab stops may be used to recognize the table. In another example, the document comprises text having a headline, which has another format as the text itself. Thus, the information of the format may be used to recognize the headline.

In a next step, and in particular after a match was found, the data quality of the match is validated. The validation of the data quality comprises at least one of: accuracy, completeness, reliability, relevance and timeliness. Preferably, the reliability of the match is validated. In particular, it is validated if the match is "true", e.g. by the location of the match (mapping). This may be done by the position of the match within the machine-encoded text or by neighbors of the match or the like. For example, the predefined value "flash point" was found within section 9 of a safety data sheet document from the machine-encoded text and marked as a match for the key phrase or a permutation thereof. A figure following the key is given as "60,732" with unit "°C". By a quality rule it can be for example concluded that the value belonging to the key is using the colon as a decimal separator despite the three digits behind and not a thousand separator since there is no method in practice to determine a flash point at >60000°C. Colon or dots are allowed separators for thousands or as decimal. Thus, the value is interpreted correctly and the pair matches the relevant quality rule for this property. The data quality of the predefined values is therefore improved by such rules. Preferably, the data quality, in particular the reliability, is validated by mapping.

In the last step, the match is provided as an output, in particular if the quality is acceptable. The match may be provided in form of the information or the predefined value or a corresponding value thereof. Preferably, the output is in structured form. For example, the output is provided as a JSON file or an XML file or the like. The output may be provided via an interface, e.g. a user interface (Ul) or an application programming interface (API). In a preferred embodiment, the output is provided as an XML or PDF file or visual thereof via a user interface and/or as JSON file via an application programming interface. In order to determine whether the data quality is acceptable or not, a scoring system or a threshold value may be used.

If the match is acceptable, the match is provided as an output, for example via an output unit to an interface or to an enterprise resource planning system. If the match is not acceptable, the match may be dismissed or discarded. For example, the user may decide to dismiss a not acceptable match and/or amend the data accordingly. However, a not acceptable match may also be written or discarded into a log or the like, e.g. for an admin or to train an artificial intelligence (Al), in particular an AI model. Preferably, the output is used to train an AI model, in particular an AI model for the information extraction and/or the ontology.

In a preferred embodiment, the machine-encoded text is raw data or data in structured format. Preferably, the raw data is unstructured and/or has no format.

In another preferred embodiment, the machine-encoded text may be processed or pre-processed, thereby being structured or having a structured format. For example, the document was a physical document being scanned including the usage of an optical character reader providing to a raw machine-encoded text. Then, a pre-processing unit may be used to vectorise the raw machine encoded text, thereby creating a structured format.

In a preferred embodiment, the method further comprises the steps of: receiving metadata of the document; and/or pre-processing the machine-encoded text of the document to obtain metadata of the document.

Thus, the method also includes the usage of metadata. Preferably, the metadata are preferably used for providing the data extracting list and/or the set of rules. In particular, the data extracting list and/or set of rules is provided based on the metadata of the document. Preferably, the metadata including at least one of: creation data of the document, modification date of the document, creation software of the document, creator of the document, format of the document and the like.

In a preferred embodiment, the data extracting list comprises a plurality of predefined values forming a set of data. Accordingly, the data extracting list comprises at least partially or fully related and/or structured and/or hierarchical data. For example, the predefined values of the data extracting list are at least partially or fully of an enumerated type (ENUM) and therefore, the predefined values are elements, members, enumerals or enumerators of the enumerated type. For example, the data extracting list comprises all kinds of "toxicity" like "oral toxicity", "dermal toxicity" and the like.

In a preferred embodiment, the data extracting list comprises a plurality of sub-lists of structural or hierarchical order.

For example, the data extracting list "toxicity" comprises a sub-list "oral toxicity", which comprises a category of the "oral toxicity" like "LD50" and/or "Category 1" and/or "Category 2" or the like.

In a preferred embodiment, the data extracting list and/or the set of rules is in form of an ontology or ontology based. Accordingly, the proposed information extraction described herein is preferably guided by an ontology.

Thus, an ontology-based information extraction (OBIE) method is proposed. In particular, the ontology is used within the information extraction in order to improve the quality and/or the speed thereof. By using an ontology, the user is also able to trace back any information extracted, e.g. why which information was extracted from where. Preferably, the ontology is based on metadata of the document. For example, the document is a safety data sheet. In this case, an ontology for a safety data sheet is used in order to extract information. In a preferred embodiment, the ontology is also based or chosen on an Al decision. For example, there are multiple ontologies for safety data sheets. In this case, an Al may choose one of the ontologies based on knowledge. In another embodiment, the user may choose between different ontologies.

In a preferred embodiment, the data extracting list and/or the set of rules and/or the ontology is chosen based on metadata of the machine-encoded text and/or the document.

For example, the machine-encoded text comprises metadata indicating that the machine-encoded text is a safety data sheet. In this case, an ontology for safety data sheets is used. If the metadata indicates a certificate of analysis (COA), an ontology for COA is used.

In a preferred embodiment, the data extracting list and/or the set of rules are configurable and/or editable and/or extendable by a user.

For example, a user may choose between different data extracting lists and/or set of rules and/or ontologies via an interface and/or may edit the data extracting list and/or the set of rules and/or the ontology via an interface.

In a preferred embodiment, the user may edit and/or extend the ontology, e.g. via an interface. Preferably, the interface is an object-oriented interface.

In a preferred embodiment, the method further comprising the step of: receiving at least one marker, preferably two markers, for the machine-encoded text, and marking an area to be searched for the predefined value with the at least one marker.

Accordingly, and in order to improve the quality and/or speed of the method, markers may be used, limiting the space to be searched. For example, the user may set two markers within the machine-encoded text via an interface, thereby marking a space to be searched, in particular within the markers. By doing so, the user may increase the speed and/or the quality of the search.

In a preferred embodiment, the output is in a structured form and/or in a markup language and/or in a format having a specific and/or predefined data format, in particular a standard format.

For example, the output is in form of a table. Additionally and/or alternatively, the output is in a markup language and/or in a predefined data format, like an XML or PDF file format. Thus, the output is in form of a specific file format. Preferably, a data interchange format. For example, the output is provided as an XML or JSON file or the like.

Preferably, the output is provided via an interface, in particular a user interface and/or an application programming interface.

In a preferred embodiment, the output is provided for a user interface and/or an enterprise resource planning system, in particular by a predefined structured output, wherein the pre-defined structured output comprises at least one of the following information: meta data of the document; date of performing the searching for the predefined value; location where the predefined value was found; quality of the document; reliability of the document and/or the predefined value.

According to a second aspect of the invention, a system for extracting information from a document is provided.

The system comprising an input unit for receiving a machine-encoded text of the document; a database unit comprising at least a data extracting list having at least a predefined values corresponding to the information to be extracted from the machine-encoded text or the document; a set of rules having at least a rule for determining a data quality for a match within the machine-encoded text; an information extraction unit for searching the machine-encoded text for the predefined value, thereby finding a match; validating the quality of the match, based on the rule; and an output unit for providing the match as an output, if the quality is acceptable.

Thus, an information extraction system for semi-automatically or automatically extracting information from a document is provided, using a data extracting list, which is preferably editable and/or extendable by a user.

Preferably, the input unit is designed and/or configured for receiving a machine-encoded text of the document, in particular a raw machine-encoded text of the document. Preferably, the database may be stored on a file system or hosted on computer clusters or cloud storage. Preferably, the database comprises at least one data extracting list and one set of rules. Preferably, the data extracting list and the set of rule provide forming at least partially a key-value database. Preferably, the database is at least partially a key-value database.

Preferably, the database may be a centralised or decentralised database or comprise additional data. A centralized database is a database that is located, stored, and maintained in a single location, e.g. a computer or a server. A decentralized database splits the workload up among multiple machines and uses sophisticated algorithms to balance the incoming and outgoing requests for the best response time, e.g. a cloud running on a plurality of servers.

Preferably, the data extracting list and/or the set of rules may be edited by an editing unit and/or a user via an interface. Preferably, the interface is a user interface (Ul) or an application programming interface (API) or a combination thereof, e.g. an output unit having a user interface (Ul) as well as an application programming interface (API). Preferably, the information extraction system is designed and/or configured to carry out at least of the above or below described methods, in particular a method for extracting information as describes herein. Preferably, the output unit may comprise a database for saving the match. By doing so, the user or the enterprise resource planning system may query matches at a later point in time. Preferably, the output unit may also comprise a log for an admin, in particular for storing errors or discarded matches.

In a preferred embodiment, the system further comprises a pre-processing unit for pre-processing the machine-encoded text for the information extraction unit.

The pre-processing unit may be part of the input unit or the information extraction unit or a standalone unit. The pre-processing unit is designed and/or configured for pre-processing the machine-encoded text, in particular, the raw machine encoded text of the document, for the information extraction unit.

Preferably, the raw machine encoded text is compiled and/or transformed and/or processed or the like into a processed machine-encoded text having a specific format and/or structure meeting the requirements of the information extraction unit. Thus, the pre-processing unit compiles the raw data of the document into processed or pre-processed data, in particular in form a specific format, which suits the requirements of the information extraction unit.

For example, the pre-processing unit decomposes, assembles and vectorises the raw machine-encoded text, e.g. by using support vector machines (SVM). In particular, line contents are separated by "." or ";", line breaks in lines or cells are undone and new strings / string variables are generated from them forming the specific format. The text after pre-processing is then searched by the information extraction unit.

In a preferred embodiment, the pre-processing unit is designed and/or configured to decompose a machine-encoded text and/or assemble a machine-encoded text and/or optionally vectorise a machine-encoded text.

Preferably, the pre-processing unit is designed and/or configured to perform at least one of the following techniques: detection of repetitive patterns to remove header and/or footer information, identify endpoints based on patterns despite a missing marker after first data set of endpoint.

In a preferred embodiment, the system further comprises an editing unit for editing the data extracting list and/or the set of rules; and/or a semantic list, in particular of a semantic unit.

In an embodiment, the system comprises only one editing unit designed and/or configured to edit the data extracting list and/or the set of rules and/or a semantic list.

In another embodiment, the system comprises a plurality of editing units each of them designed and/or configured to edit the data extracting list and/or the set of rules and/or a semantic list.

For example, the system comprises two editing units. One of them is designed and/or configured to edit the data extracting list and/or the set of rules and one of them is designed and/or configured to edit the semantic list. In this case, the first one is the so-called ontology editor and the second one is the so-called semantic-editor.

In a preferred embodiment, the system further comprises a semantic unit.

Preferably, the semantic unit comprises at least one sematic list comprising synonyms and/or translations of the predefined value. For example, the predefined value is "toxicity" and the sematic list comprises a corresponding Spanish or German translation thereof, e.g. "toxicidad" or "Toxizität". Preferably, the sematic list and in particular the elements of the semantic list are also editable by the user, e.g. by an editing unit and/or via an interface.

In a more preferred embodiment, the editing unit and/or the semantic unit and/or the generation unit are connected to an interface for the user.

In a preferred embodiment, the system further comprises a generating unit for providing and/or generating the data extracting list and/or the set of rules, in particular an ontology, preferably based on metadata of the machine-encoded text.

The generating unit may choose and provide the data extracting list and/or the set of rules, in particular the ontology, based on metadata of the document or based on artificial intelligence (Al) or machine learning (ML).

In a preferred embodiment, the generating unit is based on artificial intelligence, preferably machine learning, in particular deep learning.

For example, the generating unit is based on ML and designed to provide an ontology. In this case, the generating unit may enhance the ontology based on the output. For example, the generation unit is ML based and provides an ontology for safety data sheets, then the output for each safety data sheet may be used by the ML to enhance the ontology for safety data sheets accordingly. In another example, the Al may also amend and/or extend the ontology.

In a preferred embodiment, the information extraction unit is designed and/or configured for automatically extracting structured information from the machine-encoded text.

In preferred embodiment, the information extraction unit is based on artificial intelligence, preferably machine learning, in particular deep learning. Preferably, the information extraction unit uses a mapping technique to identify matches, e.g. a natural language processing (NLP), in particular a based on a statistical method or a neural network. For example, the information extraction unit is Al based. In this case, the information extraction unit may choose automatically between different extraction methods, e.g. based on metadata of the document, quality of the machine-encoded text, knowledge or the like.

In a preferred embodiment, the information extraction unit uses an approximate string matching, in particular an n-gram model, in order to search the machine-encoded. Alternatively, distance measurement or other methods may be suitable as well.

Approximate string matching is a technique of finding strings that match a pattern approximately (rather than exactly). Preferably, the offset or error of the approximation is set by a user, e.g. in form of a number. For example, the number is "1". In this case, one error within in the match is allowed, e.g. "an" is a match for "and" or the like. Depending on the method, this number is also called wildcard. Preferably, the n-gram model is used for the approximate string matching. Preferably, the user may set the n-gram model, e.g. the value of n or the usage thereof. For example, the n-gram may be used for distance determination or counting and/or defining syllables. By doing so, words may also be categorized. By using an n-gram model or the like, matches may be found even if the machine-encoded text comprises errors and/or the document comprises errors. For example, the safety data sheet comprises "toxicit" and the information extraction unit searches for "toxicity", "toxicit" may never be identified as a match. However, by using an approximate string matching "toxicit" can be found, e.g. by setting n to "1" in an n-gram model and thereby allowing one or less errors for a match.

Additionally or alternatively, the information extraction unit uses a distance search, preferably with varying distance. Preferably, the accuracy of the n-gram model can be set by the user, e.g. via the interface.

In a preferred embodiment, the output unit provides a structured output and/or is connectable to an enterprise resource planning system and/or an interface, thereby providing the structured output to the enterprise resource planning system and/or the interface.

Preferably, the interface is an object-oriented interface, e.g. an object-oriented user interface. For example, the user interface may provide the output as a PDF file with marked matches, which editable by the user online. Preferably, the user may also mark a text passage within that PDF file via the user interface as a predefined value or as endpoint, e.g. parent or child endpoint of the ontology.

In a preferred embodiment, the system and/or the units, in particular as describes herein, are designed and/or configured to perform any of each methods as describes herein.

According to a third aspect of the invention, a computer program product comprising instructions, which, when the program is executed by a computer, causes the computer to carry out a method as described above or below.

In a preferred embodiment, the computer program product further comprising instructions, which, when the program is executed by a computer, causes the computer to provide an, preferably object-oriented, interface for a user, wherein the interface comprises at least one of the following:
- a request for receiving an image of a document or a machine-encoded text;
- a request for receiving meta data of a document or a machine-encoded text;
- a request for a marker for a document or a machine-encoded text;
- a request for an enumeral, in particular for adding to a data extracting list;
- a request for editing an ontology;
- a request for a new endpoint of an ontology;
- a visual of a document or a machine-encoded text;
- a visual of a data extracting list;
- a visual of an ontology;
- a visual of the matches;
- a visual of the matches mapped and the machine-encoded text in a structured format;
- a function for editing the ontology;
- a function for adjusting (semantic) distances, in particular for finding matches and/or mapping;
- a function for editing or extending the data extracting and/or the set of rules.

Preferably, all features as described above or herein are provided for a UI and/or an API. Thus, the user and/or a third party program like an ERP system are able to fully communicate and/or extend the system and/or the method and/or the computer program product as described herein.

The system and methods described herein can be used, for instance, for any of the following purposes: data extraction, information extraction, machine learning, machine reading and the like, in particular for enterprise resource planning or other integrated management. Any of these uses establishes a further aspect.

It shall be understood that the methods and systems as described above and the computer program product as described above have similar and/or identical preferred embodiments, in particular, as defined in the respective dependent claims.

It shall also be understood that a preferred embodiment of the present invention can also be any combination of the dependent claims or above embodiments with a respective independent claim.

It shall also be understood that any connection of units or systems herein is to be understood as a data connection or data communication system that transfers, e.g. sending and receiving, data between the units and/or systems, e.g. a wire, a bus or the like. However, the data communication may also be wireless.

These and other aspects of the present invention will be apparent from and elucidated with reference to the embodiments described hereafter.

### BRIEF DESCRIPTION OF THE DRAWINGS

In the following drawings:
- Fig. 1: shows schematically and exemplarily a flowchart of a method for extracting information from a document,
- Fig. 2: shows schematically and exemplarily an embodiment of a system for extracting information form a document, and
- Fig. 3: shows schematically and exemplarily an embodiment of an ontology for an extraction unit.

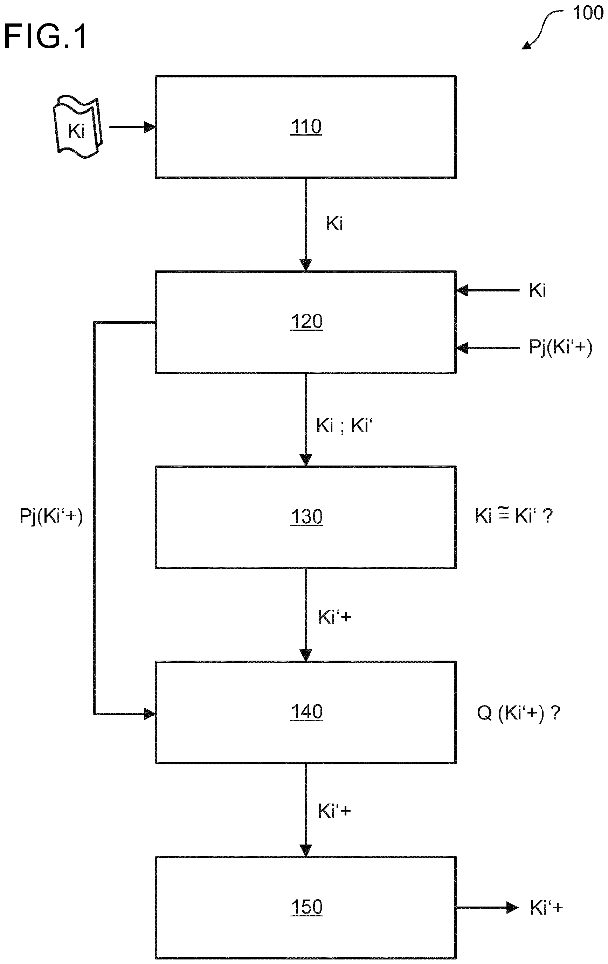

Fig. 1 shows schematically and exemplarily a method 100 for extracting information from a safety data sheet.

In a first step 110, the safety data sheet is received as a machine-encoded text. The machine-encoded text is preferably an electronic or digital conversion of a document. In particular, the machine-encoded text is preferably an electronic conversion of the document including data, preferably data described herein, like technical data or metadata. Preferably, the document is a machine-readably document, in particular a machine-readably document providing technical data in natural language text, e.g. a safety data sheet or the like.

In another step 120, before or simultaneous or after the step 110 of receiving, a data extracting list and a set of rules are provided. The data extracting list comprises at least a predefined value corresponding to an information to be extracted from the machine-encoded text or the document. The term "pre-defined value" refers to a value which is defined in advance, for example by the user or by loading a list comprising predefined values. The set of rules comprises at least a rule for validating a data quality for a match of the predefined value with the information. In particular, the data extracting list has at least a predefined values ki' corresponding to the information ki and the set of rules has at least a rule pⱼ(ki'+) for validating a data quality Q(ki'+).

In a next step 130, the machine-encoded text is searched for the predefined value ki', thereby finding a match ki'+. For example, the predefined value may be "toxicity" and therefore, the method proposed herein searches the machine-encoded text for any kind of "toxicity", like "oral toxicity" or "dermal toxicity".

In a next step 140, the data quality Q(ki'+) of the match ki'+ is validated, based on the rule pj(ki'+). The validation of the data quality comprises at least one of: accuracy, completeness, reliability, relevance and timeliness. Preferably, the reliability of the match is validated. In particular, it is validated if the match is "true", e.g. by the location of the match (mapping). This may be done by the position of the match within the machine-encoded text or by neighbors of the match or the like. For example, the rule defines any "toxicity" within the first 100 characters of the machine-encoded text as "invalid", in particular due to the fact the first 100 characters of a safety data sheet usually comprise meta data like supplier address and the like. Hence, by using such rules, the data quality can be increased many times over.

In a next step 150, the match ki'+ is provided as an output, in particular if the data quality Q(ki'+) is acceptable. The match may be provided in form of the information or the predefined value or a corresponding value thereof. Preferably, the output is in structured form. For example, the output is provided as a JSON file or an XML file or the like. The output may be provided via an interface, e.g. a user interface (Ul) or an application programming interface (API). In a preferred embodiment, the output is provided as an XML or PDF file or visual thereof via a user interface and/or as JSON file via an application programming interface. In order to determine whether the data quality is acceptable or not, a scoring system or a threshold value may be used.

If the match is acceptable, the match is provided as an output, for example via an output unit to an interface or to an enterprise resource planning system. If the match is not acceptable, the match may be dismissed or discarded. For example, the user may decide to dismiss a not acceptable match and/or amend the data accordingly. However, a not acceptable match may also be written or discarded into a log or the like, e.g. for an admin or to train an artificial intelligence (Al), in particular an Al model. Preferably, the output is used to train an Al model, in particular an Al model for the information extraction and/or the ontology.

In a preferred embodiment, the match ki'+ is provided in a structured manner, e.g. in a structured format for an enterprise resource planning system.

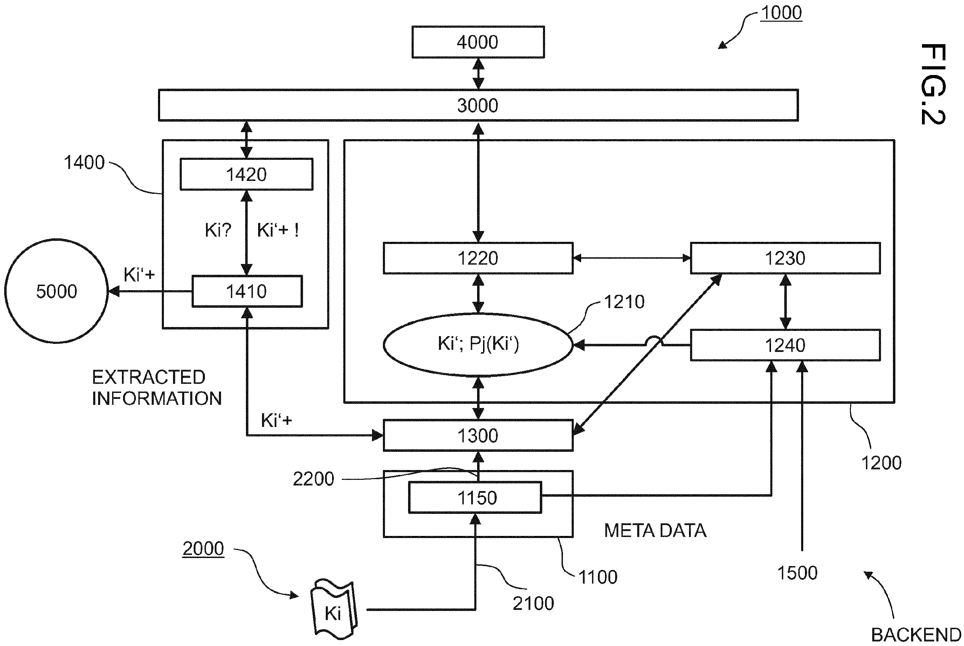

Fig. 2 shows schematically and exemplarily an embodiment of a system 1000 for extracting information form a document 2000.

The system 1000 comprises an input unit 1100, a database unit 1200, an information extraction unit 1300, an output unit 1400 and a third party input 1500. In the shown embodiment, the database unit 1200 also comprises an ontology 1210, an editing unit 1220, a semantic unit 1230 and a generating unit 1240. These units, however, may also be part of other units or separate / standalone units of the system.

In order to interact with the system 1000, an interface 3000 may be provided for a user 4000. In addition, the system 1000 may be connected to an enterprise resource planning system 5000.

The input unit 1100 is designed and/or configured for receiving a machine-encoded text of the document 2000. Preferably, the machine-encoded text 2100 is a raw machine-encoded text of the document 2000. In another embodiment, the input unit 1100 may also be designed and/or configured for receiving the document 2000 and providing a machine-encoded text of the document 2000. The input unit 1100 is connected to the information extraction unit 1300, e.g. via a pre-processing unit 1150.

In this embodiment, the pre-processing unit 1150 is part of the input unit 1100. However, the pre-processing unit 1150 may also be part of the information extraction unit 1300 or a separate / standalone unit of the system 1000 connecting the input unit 1100 with the information extraction unit 1300. The pre-processing unit 1150 preferably compiles a raw of the machine-encoded text 2100 into a processed machine-encoded text 2200, having a specific format or structure meeting the requirements of the information extraction unit 1300. For example, the pre-processing unit decomposes, assembles and vectorises the raw machine-encoded text 2100, e.g. by using support vector machines (SVM).

The processed machine-encoded text 2200 is then searched by the information extraction unit 1300. Preferably, the pre-processing unit 1150 is also designed and/or configured to extract metadata of the raw 2100.

The information extraction unit 1300 searches the processed machine-encoded text 2200 for at least one predefined value kᵢ from the ontology 1210. If any matches are found, the information extraction unit 1300 validates the data quality of the matches. If the data quality meets a predetermined criteria, the match kᵢ'+ is provided to the output unit 1400. Preferably, the predefined value kᵢ is provided as the match kᵢ'+ to the output unit 1400.

The output unit 1400 comprises a database and/or log 1410 for storing the matches kᵢ'+ or found predefined value kᵢ' within the machine-encoded text 2200 and also a question answering system (Q/A-system) 1420.

A User 4000 may request any information from the system 1000 via the Q/A-system 1420 using the interface 3000. Preferably, the matches kᵢ'+ are also send or stored within the database and/or log 1410 for the enterprise resource planning system 5000.

In order to achieve a high accuracy and/or reliability of the matches kᵢ'+, the ontology is provided and/or generated based on metadata of the machine-encoded text 2200. The metadata may be extracted by the pre-processing unit 1150 or provided by the third party input 1500.

In addition, the system may also comprise a semantic unit 1230 enabling the system to search for synonyms of predefined value and/or translations thereof.

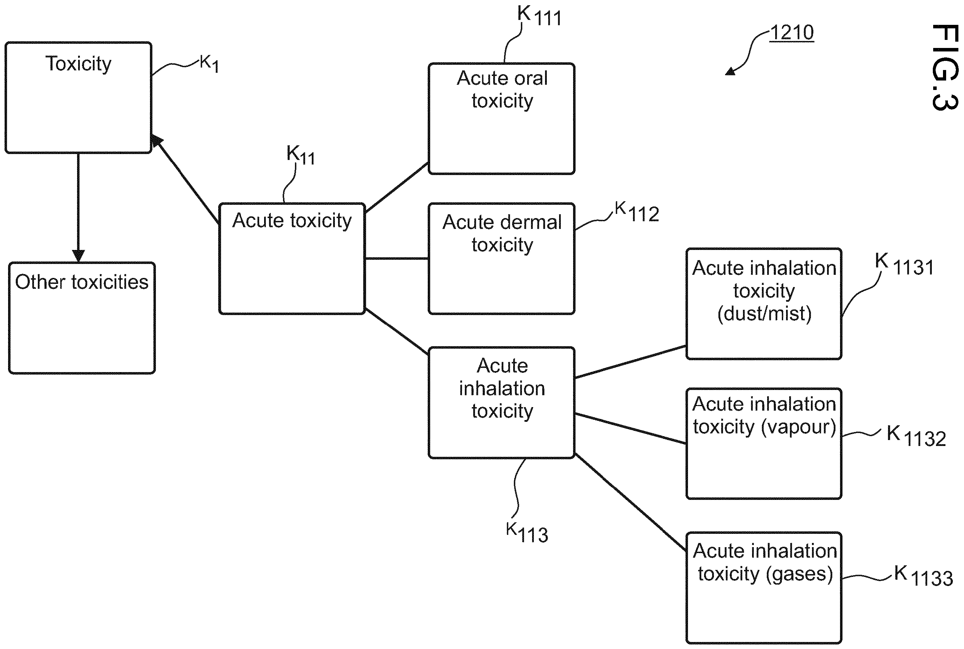

Fig. 3 shows schematically and exemplarily an embodiment of an ontology 1210 for an extraction unit.

The ontology comprises a plurality of predefined values kᵢ, which are structured in lists or sub-lists based on the document to be searched or the metadata thereof. For example, a document 2000 to be searched is safety data sheet. The document 2000 is processed, thereby extracting the metadata. Based on the metadata an appropriate ontology 1210 is chosen, e.g. by the extraction unit. For sake of simplicity, only a small part of the ontology 1210 is shown in Fig. 3, in particular the list or sub-list of "toxicity".

The list has a hierarchical and structured form, wherein "toxicity" k₁ is the parent endpoint of the ontology. The "toxicity" k₁ comprises an element "acute toxicity" k₁₁, which comprises the elements "acute oral toxicity" k₁₁₁, "acute dermal toxicity" k₁₁₂ and "acute inhalation toxicity" k₁₁₃, which comprises the elements "acute inhalation toxicity (dust/mist)" k₁₁₃₁, "acute inhalation toxicity (vapour)" k₁₁₃₂ and "acute inhalation toxicity (gases)" k₁₁₃₃.

The elements "acute inhalation toxicity (dust/mist)" k₁₁₃₁, "acute inhalation toxicity (vapour)" k₁₁₃₂ and "acute inhalation toxicity (gases)" k₁₁₃₃ are the child endpoints of the ontology 1210. Thus, the ontology 1210 comprises a plurality of elements in a structured and hierarchical relation.

Such an ontology 1210 may be generated by a generating unit 1240for ontologies as described herein, e.g. based on metadata and/or data knowledge. However, such an ontology may also be created by a user and or an admin. Either way, the ontology is preferably stored in a database, as described herein.

A method for extracting information from a document is presented, in some embodiments, at least comprising the steps of: i) receiving a machine-encoded text of the document, ii) providing, in particular based on metadata of the machine encoded text and/or the document, at least: a data extracting list having at least a predefined value corresponding to the information to be extracted from the machine-encoded text or the document; and a set of rules having at least a rule for validating a data quality for a match of the predefined value with the information within the machine-encoded text, iii) searching the machine-encoded text for the predefined value, thereby finding a match of the predefined value with the information, iv) validating the data quality of the match, based on the rule, and v) providing the match as an output, in particular if the data quality is acceptable.

Moreover, a system for extracting information from a document is presented, in some embodiments, at least comprising: i) an input unit configured to receive a machine-encoded text of the document, ii) a database unit comprising at least: a data extracting list having at least a predefined value corresponding to the information to be extracted from the machine-encoded text or the document; and a set of rules having at least a rule for determining a data quality for a match within the machine-encoded text, iii) an information extraction unit for: searching the machine-encoded text for the predefined value, thereby finding a match; and validating the quality of the match, based on the rule; and an output unit for providing the match, as an output, if the quality is acceptable.

In a preferred embodiment, the method and/or the system proposed herein allow unknowledgeable users (without any programming skills) to extract data from documents and automatically delivering a structured output of such information.

Furthermore, the proposed method empowers the user without programming-skills to improve and extend the extraction as necessary. Also, even new document types can be set up and defined by the user to generate fully structured outputs. In particular, the outputs can be based on reference information to which an extract is mapped, or, output as provided in the original document.

Additionally, the proposed method can also be combined with a subsequent rule sets to determine the quality or reliability of the documents which is usually a time-consuming task for a human expert.

Although in the above-described embodiments reference was made to extracting information, it will be understood that the method and/or system may be used for other purposes, e.g. for data extraction, information extraction, machine learning, machine reading or the like, in particular for enterprise resource planning or other integrated management systems.

Even if in the above-described embodiments some functions have been described only with respect a specific unit, the same functions may be applicable to other units or a plurality of units.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items or means recited in the claims. The mere fact that certain measures are recited in mutually different dependent claims does not indicate that a combination of these measures cannot be used to advantage.

Procedures like the providing of a machine-encoded text, a data extracting list, search the machine-encoded text etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or otherwired or wireless telecommunication systems.

Any units described herein may be processing units that are part of a classical computing system. Preprocessing units or processing units or generating units may include a general-purpose processor and may also include a field programmable gate array (FPGA), an application specific integrated circuit (ASIC), or any other specialized circuit. Any memory or database may be a physical system memory or a physical system database, which may be volatile, non-volatile, or some combination of the two. The term "memory" or "database" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more preprocessing units and/or processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices. The method may be also performed within an enterprise resource planning.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. A method (100) for extracting information (kᵢ) from a document (2000), comprising the steps of:
- receiving (110) a machine-encoded text (2100, 2200) of the document (1000);
- providing (120) a data extracting list (2100) having a predefined value (kᵢ') corresponding to the information (kᵢ) to be extracted from the machine-encoded text or the document; and a set of rules (2200) having a rule (pⱼ(kᵢ'+)) for validating a data quality (Q(kᵢ'+)) for a match of the predefined value (kᵢ') with the information (kᵢ) within the machine-encoded text (1000);
- searching (130) the machine-encoded text (1100) for the predefined value (kᵢ'), thereby finding a match (kᵢ'+) of the predefined value (kᵢ') with the information (kᵢ);
- validating (140) the data quality (Q(kᵢ'+)) of the match (kᵢ'+), based on the rule (pⱼ(kᵢ'+)); and
- providing (150) the match (kᵢ'+) as an output.

2. The method (100) according to claim 1, wherein
- the machine-encoded text is raw data or data in structured format.

3. The method (100) according to claim 1 or 2, further comprising the steps of:
- receiving metadata of the document; and/or
- pre-processing the machine-encoded text of the document to obtain metadata of the document.

4. The method (100) according to any of the preceding claims, wherein
- the data extracting list comprises a plurality of predefined values forming a set of data, having a related or structural or hierarchical order of the predefined values and/or
- the data extracting list comprises a plurality of sub-lists of related or structural or hierarchical order.

5. The method (100) according to any of the preceding claims, wherein
- the data extracting list and/or the set of rules is in form of an ontology or ontology based and/or
- the data extracting list and/or the set of rules and/or the ontology is chosen based on metadata of the machine-encoded text and/or the document.

6. The method (100) according to any of the preceding claims, wherein
- the data extracting list and/or the set of rules are configurable and/or editable and/or extendable by a user.

7. The method (100) according to any of the preceding claims, further comprising the step of:
- receiving a marker for the machine-encoded text and marking an area to be searched for the predefined value with the marker.

8. The method (100) according to any of the preceding claims, wherein
- the output is in a structured form and/or in a markup language and/or in a format having a specific and/or predefined data format and/or
- the output is provided for a user interface and/or an enterprise resource planning system, wherein the predefined structured output comprises at least one of the following information:
- metadata of the document;
- date of performing the searching for the predefined value;
- location where the predefined value was found;
- quality of the document;
- reliability of the document and/or the predefined value.

9. A system (1000) configured to extract information from a document (2000), comprising:
- an input unit (1100) configured to receive a machine-encoded text (2100) of the document;
- a database unit (1200) comprising a data extracting list (2100) having at least a pre-defined value (kᵢ') corresponding to the information (kᵢ) to be extracted from the machine-encoded text or the document; and a set of rules (2200) having at least a rule (pⱼ(kᵢ'+)) for determining a data quality (Q(kᵢ+)) for a match within the machine-encoded text (1000);
- an information extraction unit (1300) configured to search (140) the machine-encoded text (1100) for the predefined value (kᵢ'), thereby finding a match (kᵢ'+); and validate the quality (Q(kᵢ)) of the match (kᵢ'+), based on the rule (pⱼ(kᵢ'+)); and
- an output unit (1400) configured to provide (140) the match (kᵢ'+), as an output, if the quality is acceptable.

10. The system (1000) according to claim 9, further comprising:
- a pre-processing unit (1150) configured to pre-process the machine-encoded text (2100) for the information extraction unit (1200).

11. The system (1000) according to claim 9 or 10, wherein
- the pre-processing unit (1150) is designed for at least one of:
- decompose a machine-encoded text;
- assemble a machine-encoded text,
- optionally vectorise a machine-encoded text.

12. The system (1000) according to any of claims 9 to 11, further comprising:
- an editing unit (1220) configured to edit the data extracting list (2100) and/or the set of rules; and/or a semantic list and/or
- a generating unit (1240) configured to provide and/or generate the data extracting list and/or the set of rules.

13. The system (1000) according to any of claims 9 to 12, wherein
- the information extraction unit is configured to automatically extract structured information from the machine-encoded text (2100).

14. The system according to any of claims 9 to 13, wherein
- the system and/or the units are designed to perform a method according to any of claims 1 to 9.

15. A computer program product comprising instructions, which, when the program is executed by a computer, causes the computer to carry out a method according to any of claims 1 to 9 and/or, causes the computer to provide an interface for a user, wherein the interface comprises at least one of the following:
- a request for receiving an image of a document or a machine-encoded text;
- a request for receiving meta data of a document or a machine-encoded text;
- a request for a marker for a document or a machine-encoded text;
- a request for an enumeral for adding to a data extracting list;
- a request for editing an ontology;
- a request for a new endpoint of an ontology;
- a visual of a document or a machine-encoded text;
- a visual of a data extracting list;
- a visual of an ontology;
- a visual of the matches;
- a visual of the matches mapped and the machine-encoded text in a structured format;
- a function for editing the ontology;
- a function for adjusting (semantic) distances for finding matches and/or mapping; and
- a function for editing or extending the data extracting list and/or the set of rules.
